# EUROPEAN PATENT APPLICATION

(11) **EP 1 585 125 A1**
(43) Date of publication of application: **12.10.2005**
(21) Application number: 04702859.2
(22) Date of filing: 16.01.2004
(51) Int. Cl.: G11B 17/028

(54) **TURN TABLE DEVICE MANUFACTURING METHOD AND TURN TABLE DEVICE**

(30) Priority: 16.01.2003 JP 2003008861
(71) Applicant: MINEBEA Co., Ltd., Nagano 389-0206 (JP)
(72) Inventor: MATSUSHITA, Kunitake, Minebea Co., Ltd., Iwata-gun, Shizuoka 437-1102 (JP); YAMAWAKI, Takayuki, Minebea Co., Ltd., Iwata-gun, Shizuoka 437-1102 (JP); INAGAKI, Masaaki, Minebea Co., Ltd., Iwata-gun, Shizuoka 437-1102 (JP); SUZUKI, Katsutoshi, Minebea Co., Ltd., Iwata-gun, Shizuoka 437-1102 (JP)
(74) Representative: Rüger, Barthelt & Abel Patentanwälte
(86) International application number: PCT/JP2004/000321
(87) International publication number: WO 2004/064058

(57) **Abstract**

A step portion (12) is formed on a table body (11) to be attached to a motor (20), and an ultraviolet curable adhesive as a resin (13) is applied to a mount-place forming position of the table body (11) including the step portion (12), and cured. The table body (11) is attached to the motor (20), and the surface of the resin (13) is cut while rotating a rotating shaft (21) of the motor (20). At this time, the step portion (12) prevents the peeling of the resin (13) against the force of moving the resin (13).

## Description

### Technical Field

The present invention relates to a turn table device manufacturing method and a turn table.

### Background Art

The demand for discoid information recording media such as a compact disc and a digital versatile disc, is rapidly increasing. A recording medium playback device is used for reproducing information recorded on such an information recording medium. The recording medium playback device includes a turn table device on which a recording medium is to be mounted, and which is rotary driven by a motor

Recently the access speed to the discoid information recording medium has been increased. Accordingly, in the turn table device, the elimination of the run-out of the surface of the turn table device has been devised. The degree of the run-out of the surfuce is defined by the angle between the rotating shaft of the motor and the recording-medium mount surface of the turn table device, and, the closer to the right angle that angle is, the less the run-out of the surface is. Unexamined Japanese Patent Application KOKAI Publication No. H11-25555 discloses a technology which reduces the run-out of the surface of the turn table device.

According to the technology disclosed by that Patent Publication, a friction material is adhered to the surface of the turn table, and the surface of the motion matenal is cut while rotating the turn table by the motor, thereby forming the recording-medium mount surface.

According to the turn table device manufacturing method as set forth in Unexamined Japanese Patent Application KOKAI Publication No. H11-25555, however, there is a problem such that the friction material peels away from the turn table during the cutting if the adhesion force between the turn table and the friction material is weak. Even if the friction material does not completely peel away from the turn table, incomplete adhesion may cause a deficiency with age.

### Disclosure of Invention

An object of the present invention is to provide a turn table device manufacturing method which ensures the formation of a place to mount an information recording medium, and a turn table device with high reliability.

To achieve the aforementioned object, a method of manufacturing a turn table device, according to the first aspect of the present invention, is
a method of manufacturing a turn table device, including a turn table on which an information recording medium is to be mounted, and which is rotated by a motor, which comprises:
a step forming step which forms a circumferential step portion on one side of a tabular table body of the turn table;
a coating step which coats a resin on a predetermined part of the one side of the table body including the step portion;
a curing step which cures the coated resin;
an attaching step which attaches the table body to the motor with the other side of the table body facing the motor, before or after the coating step and the curing step; and
a flattening step which flattens a surface of the cured resin by cutting that surface while rotating the motor attached with the table body.

By taking such a manufacturing method, the table body is formed with the step portion. The resin is coated on the predetermined part of the one side of the table body including the step portion, by the coating step, and cured by the curing step. The table body is attached to the motor by the attaching step. The surface of the resin, coated on the table body, is cut and flattened by the flattening step. A highly precise perpendicularity relative to the rotating shaft of the motor can be assured by the flattening step. In the flattening step, as the table body is formed with the step portion, even if a lateral force is applied to the resin, the step portion prevents the movement of the resin, whereby the resin does not peel away.

It is preferable that the predetermined part of the one side of the table body, including the step portion, should be coated with an ultraviolet curable adhesive in the coating step. In this case, the ultraviolet curable adhesive is irradiated with ultraviolet rays to be cured in the curing step.

It is preferable that an outer circumferential portion of the step portion should be protrusively formed so as to be higher than an inner circumferential portion thereof

To achieve the aforementioned object, a method of manufacturing a turn table device, according to the second aspect of the present invention, is
a method of manufacturing a turn table device, including a turn table on which an information recording medium is to be mounted, and which is rotated by a motor, which comprises:
a protruding-portion forming step which forms a circumferential protruding portion on one side of a tabular table body of the turn table;
a coating step which coats a resin on a predetermined part of the one side of the table body including the protruding portion;
a curing step which cures the coated resin;
an attaching step which attaches the table body to the motor with the other side of the table body racing the motor, before or after the coating step and the curing step; and
a flattening step which flattens a surfuce of the cured resin by cutting that surface while rotating the motor attached with the table body.

By taking such a manufachuing method, the table body is formed with, instead of the step portion, the protruding portion. The protruding portion stops the movement of the resin toward the radial direction and the movement toward the center.

It is preferable that the predetermined part of the one side of the table body including the protruding portion should be coated with an ultraviolet curable adhesive in the coating step. In this case, the ultraviolet curable adhesive is irradiated with ultraviolet rays to be cured in the curing step.

To achieve the aformentioned object, a method of manufacturing a turn table device according to the third aspect of the present invention is,
a method of manufacturing a turn table device, including a turn table on which an information recording medium is to be mounted and which is rotated by a motor, which comprises:
a groove-portion forming step which forms a circumferential groove portion on one side of a tabular table body of the turn table;
a coating step which coats a resin on a predetermined part of the one side of the table body including the groove portion;
a curing step which cures the coated resin;
an attaching step which attaches the table body to the motor with the other side of the table body facing the motor, before or after the coating step and the curing step; and
a flattening step which flattens a surface of the cured resin by cutting while rotating the motor attached with the table body

By taking such a manufacturing method, the table body is formed with, instead of the step portion, the groove. The groove stops the movement of the resin toward the radial direction and the movement of toward the center.

It is preferable that the predetermined part of the one side of the table body including the groove portion should be coated with an ultraviolet curable adhesive in the coating step. In this case, the ultraviolet curable adhesive is irridiated with ultraviolet rays to be cured in the curing step.

To achieve the aforementioned object, a turn table device according to the fourth aspect of the present invention, is
a turn table device which comprises a turn table on which an information recording medium is to be mounted, and which is rotated by a motor, wherein
the turn table includes:
a tabular table body which is attached to the motor with one side facing the motor, and has a circumferential step portion formed on the other side; and
a resin portion which is adhered to a predetermined part of the other side of the table body including the step portion, and
a surface of the resin portion is flattened as a mount surface where the information recording medium is to be mounted.

According to such a structure, a force of peeling the resin away from the table body in the flattening is not easily applied to the resin by the step portion, and the adhesive force of the resin to the table body does not easily decrease. Accordingly, the turn table device can be with high reliability

It is desirable that the resin portion should be an ultraviolet curable adhesive cured.

The other side of the table body may be formed with a plurality of step portions.

It is preferable that the step portion should be protrusively formed in such a way that an outer circumferential side thereof becomes higher than an inner circumferential side thereof.

To achieve the aforementioned object, a turn table device according to the fifth aspect of the present invention, is

A turn table device which comprises a turn table on which an information recording medium is to be mounted, and which is rotated by a motor, wherein
the turn table includes:
a tabular table body which is attached to the motor with one side facing the motor, and has a circumferential protruding portion on the other side; and
a resin portion which is adhered to a predetermined part the other side of the table body including the protruding portion, and
a surface of the resin portion is flattened as amount Surface where the information recording medium is to be mounted.

According to such a structure, the table body is formed with, instead of the step portion, the protruding portion.

It is preferable that the resin portion should be an ultraviolet curable adhesive cured.

The other side of the table body may be formed with a plurality of protruding portions.

To achieve the aforementioned object, a turn table device, according to the sixth aspect of the present invention, is
a turn table device which comprises a turn table on which an information recording medium is to be mounted, and which is rotated by a motor, wherein
the turn table includes:
a tabular table body which is attached to the motor with one side facing the motor, and has a circumferential groove portion on the other side; and
a resin portion which is adhered to a predetermined part of the other side of the table body including the groove portion, and
a surface of the resin portion is flattened as a mount surface where the information recording medium is to be mounted.

According to such a structure, the table body is formed with, instead of the step portion, the groove.

It is preferable that the resin portion should be an ultraviolet curable adhesive cured.

The other side of the table body may be formed with a plurality of step portions.

### Brief Description of Drawings

FIG. 1 is a view illustrating a turn table device according to the first embodiment of the present invention.
FIG. 2 is a top view illustrating a turn table of the turn table device in FIG. 1.
FIG. 3A to FIG. 3D are partly sectional views illustrating a method for the turn table device of FIG. 1.
FIG 4 is a partly sectional view illustrating a turn table device according to a second embodiment of the present invention.
FIG 5 is a partly sectional view illustrating a turn table device according to a third embodiment of the present invention.

### Best Mode for Carrying Out the Invention

### [First Embodiment]

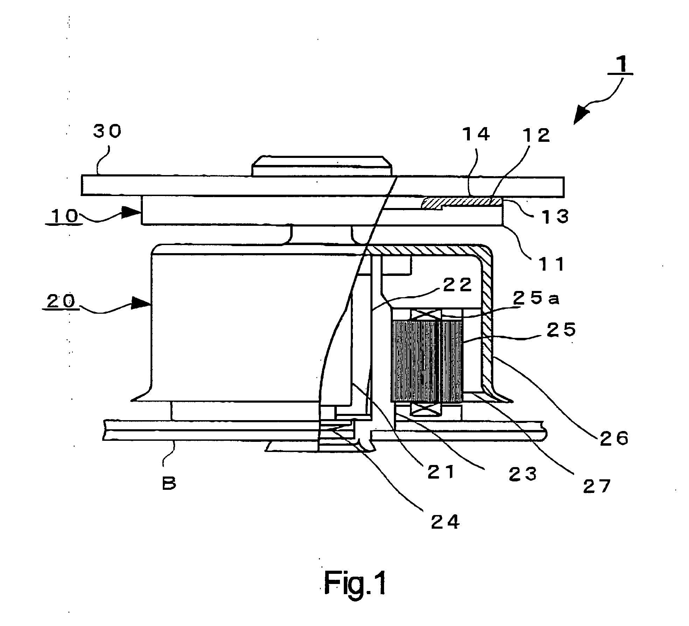

FIG. 1 is a configuration view illustrating a turn table device of according to the first embodiment of the present invention.

A turn table device 1 comprises a turn table 10 and a motor 20. The turn table 10 is attached to a rotating shaft 21 of the motor 20. An information recording medium 30 is to be mounted on the turn table 10. The turn table device 1 rotates the turn table 10 and the information recording medium 30, mounted on the turn table 10, by the motor 20.

The motor 20 is a spindle motor. The motor 20 has a cylindrical housing 23 which surrounds the outer circumference and the rear end of the rotating shaft 21 through a radial slide bearing 22. A thrust bearing 24 is placed an the rear end of the rotating shaft 21, and presses it toward the front end of the rotating shaft 21. The rear end of the housing 23 is attached to a motor board B. A stator 25 is 50 arranged as to surroud the outer circumferential of the housing 23. The stator 25 is fixed to the housing 23.

An exciting coil 25a is incorporated into the stator 25. A rotor magnet 27, attached to a rotor yoke 26, rotates around the stator 25. The rotor yoke 26 is fixed to the rotating shaft 21. When the rotor magnet 27 rotates, the rotating shaft 21 integrally rotates with it.

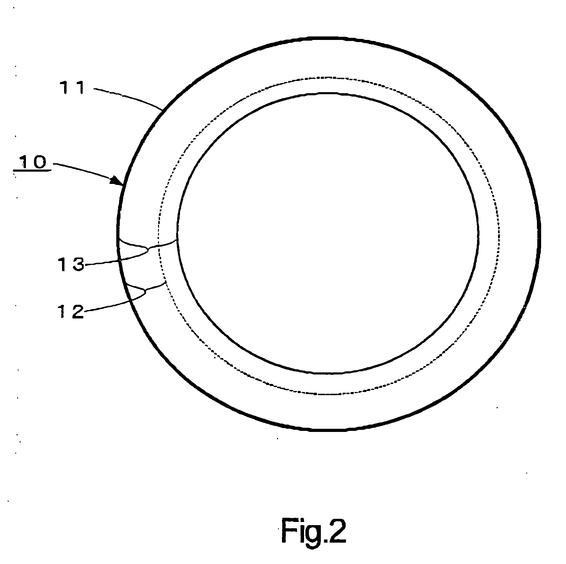

The turn table 10 has a table body 11. As illustrated in FIG. 2, the table body 11 is formed in a discoid shape. The table body 11 is attached to the rotor yoke 26 or the rotating shaft 21 (rotating shaft 21, in FIG. 1). The table body 11 is made of a polycarbonate resin.

As illustrated in FIGS. 1 and 2, a step portion 12 is formed on the outer circumferential portion of the surface of the table body 11 which faces the opposite side of the motor 20 (hereinafter, upper surface). The step portion 12 is protrusively formed along the outer circumference of the table body 11. Accordingly, the outer circumferential side of the table body 11 is higher than the inner circumferential side thereof.

As illustrated in FIGS. 1 and 2, a resin (resin layer) 13 of an ultraviolet curable adhesive which is cured is adhered to the upper surface of the table body 11. The resin 13 has an annular shape. The resin 13 is adhered to the step portion 12, and its surface is flattened. The flattened surface of the resin 13 is to be a mount surface 14 on which the information recording medium 30 is to be mounted.

The information recording medium 30 is to be mounted on the mount surface 14 in such a way that the central opening of the information recording medium 30 is coaxialy arranged relative to the rotating shaft 21 of the motor 20. The information recording medium 30 is fixed to the mount surface 14 by a non-illustrated clamper or the like.

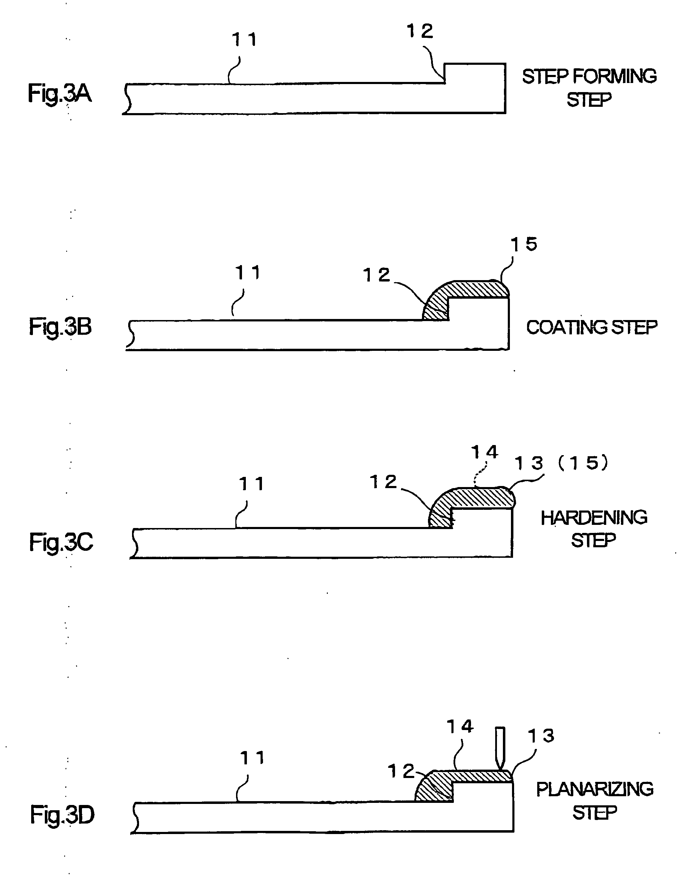

Next, the manufacturing method of the turn table 10 will now be explained with reference to FIGS. 3A to 3D.

First, the table body 11, in a substantially discoid shape as illustrated in FIG. 3A, is formed by injection molding of a polycarbonate resin (step forming step). According to the injection molding, the step portion 12 on the upper surface of the table body 11 is formed. The step which forms the table body 11 may be separated from the step which forms the step portion 12.

Next, as illustrated in FIG. 3B, an ultraviolet curable adhesive 15 is applied to a predetermined position of the upper surface of the table body 11 which includes the step portion 12 (costing step). The predetermined position is a mount-surface-14 forming region, and the adhesive 15 is annularly applied.

Subsequently, as illustrated in FIG 3C, the adhesive 15 is, for instance, irradiated with ultraviolet lays, so that the adhesive 15 applied to the table 11 is cured, thereby forming the resin (resin layer) 13 (curing step).

Next, as illustrated in FIG 3D, a surface of the table body 11, opposite to the upper surface thereof where the resin 13 is placed is made to face the motor 20, and the table body 11 is attached to the rotating shaft 21 or the rotor yoke 26. Subsequently, the turn table device 1 in-step is fixed to a cutting machine (not illustrated). The motor 20 is then so operated as to rotate the rotating shaft 21, the rotor yoke 26, and the turn table 10. With the turn table 10 rotated, the surface of the resin 13 on the upper surface of the table body 11 is cut by, for instance, a cutting tool. At this time, the cutting tool is moved along the rotating shaft 21, and the surface of the resin 13 is so flattened as to be perpendicular to the rotating shaft 21 (flattenmg step).

The information recording medium 30 is mounted on the mount surface 14 of the turn table device 1 manufactured as explained, and fixed to the turn table device 1 by the non-illustrated clamper or the like. As the motor 20 starts up, the rotor yoke 26 and the rotating shaft 21 rotate, and the information recording medium 30 also rotates. For the rotating information recording medium, readout or writing of information is performed by a head of a non-illustrated record reproducing device or the like.

The turn table device of the embodiment manufactured as explained has the following advantages.
(1) The motor 20 is rotated after the table body 11 is attached to the motor 20, and the surface of the resin 13 is cut while rotating the table body 11. Accordingly, it is possible to improve the precision of the perpendicularity of the mounting surface 14 relative to the rotating shaft 21 of the motor 20.
(2) As the ultraviolet curable adhesive 15 is used as the resin 13, the curring of the resin does not need heating, and the table body 11 made of a polycarbonate resin is not deformed by heating.
(3) The table body 11 is formed with the step portion 12. Accordingly, when a lateral force is applied to the resin 13, the step portion 12 stops the movement of the resin 13 against that force. Therefore, it is possible to prevent the peeling of the resin 13 in the flattening step and the weakening of the adhesion force of the resin 13 to the table body 11. Hence, the generation of the failure at the manufacturing step can be reduced, thereby realizing the turn table device with high reliability.
(4) Because of the step portion 12, the outer circumference side of the upper surface of the table body 11 is higher than the inner circumferential side thereof. Accordingly, even if a force in a radial direction is applied to the resin 13, the resin 13 can endure that force.

### [Second Embodiment]

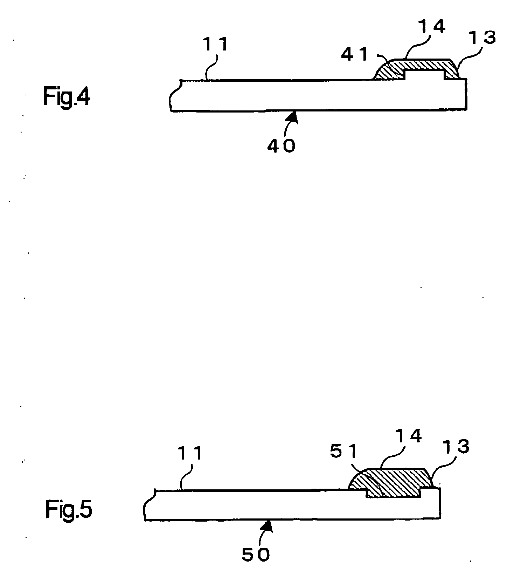

FIG. 4 is a partly sectional view illustrating a turn table device according to the second embodiment of the present invention, and the elements in common with the elements in FIG. 1 will be denoted by the common symbols.

In the first embodiment, the step portion 12 is formed on the outer circumferential portion of the upper surface of the table body 11, but in a turn table device 40 of this embodiment, an annular protruding portion 41 is formed in the vicinity of the outer circumferential portion of the upper surface of the table body 11. The ultraviolet curable adhesive as the resin 13 is applied to a predetermined part of the table body 11 including the protruding portion 41, and cured. The surface of the resin 13 is flattened, thereby forming the mount surface 14.

The turn table device 40 as explained can be manufactured by carrying out, instead of the step manufacturing step, a protruding-portion forming step or the like and forming the table body 11 with the protruding portion 41, and by carrying out the coating step, the curing step, the attaching step and the flattening step for the table body formed with the protruding portion 41, as same as the first embodiment.

The turn table device of the embodiment with the protruding portion 41 as illustrated in FIG. 4 has the advantages (1) and (2), as same as the first embodiment, and further has the following advantage.
(5) The protruding portion 41 can weaken a force of moving the resin 13 toward the radial direction of the table body 11 and a force of moving the resin 13 toward the center of the table body 11. Accordingly, the cutting direction at the flattening step is not to be limited.

### [Third Embodiment]

FIG. 5 is a partly sectional view illustrating a turn table device according to the third embodiment of the present invention, the elements in common with the elements in FIG. 1 will be denoted by the common symbols.

In the first embodiment, the step portion 12 is formed on the outer circumferential portion of the upper surface of the table body 11, but in a turn table device 50 of this embodiment, an annular groove 51 is formed in the vicinity of the outer circumferential portion of the upper surface of the table body 11. The ultraviolet curable adhesive as the resin 13 is applied to a predetermined part of the table body 11 including the groove 51, and cured. The surface of the resin 13 is flattened, thereby forming the mount surface 14.

The turn table device 50 as explained can be manufactured by canying out, instead of the step manufacturing step, a groove forming step or the like and forming the table body 11 with the groove 51, and by carrying out the coating step, the curing step, the attaching step and the flattening step for the table body 11 formed with the groove 51, as same as the fast embodiment.

The turn table device of the embodiment with the groove 51 as illustrated in FIG. 5 has the advantages (1) and (2), as same as the first embodiment, and further has the following advantages.
(6) The groove 51 can weaken a force of moving the resin 13 toward the radial direction of the table body 11 and a force of moving the resin 13 toward the center of the table body 11. Accordingly, as same as the second embodiment, the cutting direction at the flattering step is not to be limited.
(7) As the ultraviolet curable adhesive to be the resin 13 gets into the groove 51, the positioning for the coat position of the resin 13 can be easy.

The present invention is not limited to the above-described embodiments, and can be modified in various forms. The examples of the modification are as follows.
(i) Predetermined materials can be used for the table body 11 and the resin 13. For instance, the resin 13 may not be the ultraviolet curable resin. The materials of the table body 11 and the resin 13 may be arbitrarily decided in accordance with their use environments or the like.
(ii) The motor 20 is not limited to the spindle motor illustrated in FIG. 1, and may be a motor with other structures.
(iii) The flattening step is carried out by rotating the motor 20 which incorporates the rotating shaft 21, but the flattening step may be carried out by attaching the table body 11 to the rotating shaft 21 which is not yet incorporated in the motor 20.
(iv) The numbers of the step portion 12, the protruding portion 41, and the groove 51 to be formed on the table body 11 may not be limited to one, and they may be doubly and triply formed. The plural formations of the step portion 12, the protruding portion 41, and the groove 51 in this manner stabilize the adhesive force of the table body 11 and the resin 13, thereby reducing the risk of the partial peeling of the resin 13.
(v) The attaching step of the attachment of the table body 11 to the motor 20 may be carried out before the coating step and the curing step.

As explained above, according to the present invention, the step portion, the protruding portion or the groove is formed on the table body and coated with the resin, the surface of the cured resin is flattened, and the risk of the peeling of the resin is reduced, thereby producing the turn table device with high reliability.

### Industrial Applicability

The present invention is useful for the manufacturing of the turn table device.

The present invention is based on Japanese Patent Application No. 2003-8861 filed on January 16,2003, and includes the specification, claims, drawings and abstract thereof. The disclosure of the application is hereby entirely incorporated in the present specification by reference.

## Claims

1. A method of manufacturing a turn table device, including a turn table on which an information recording medium is to be mounted, and which is rotated by a motor, the method comprising:
a step forming step which forms a circumferential step portion on one side of a tabular table body of the turn table;
a ooating step which coats a resin on a predetermined part of the one side of the table body including the step portion;
a curing step which cures the coated resin;
an attaching step which attaches the table body to the motor with the other side of the table body facing the motor, before or after the coating step and the curing step; and
a flattening step which flattens a surface of the cured resin by cutting that surface while rotating the motor attached with the table body.

2. The method of manufacturing the turn table device according to claim 1, wherein the predetermined part of the one side of the table body including the step portion is coated with an ultraviolet curable adhesive in the coating step, and
the ultraviolet curable adhesive is irradiated with ultraviolet rays to be cured in the curing step.

3. The method of manufacturing the turn table device according to claim 1, wherein an outer circumferential portion of the step portion is protrusively formed so as to be higher than an inner circumferential portion thereof.

4. A method of manufacturing a turn table device, including a turn table on which an information recording medium is to be mounted, and which is rotated by a motor, the method comprising:
a protruding-portion forming step which forms a circumferential protruding portion on one side of a tabular table body of the turn table;
a coating step which coats a resin on a predetermined part of the one side of the table body including the protruding portion;
a curing step which cures the coated resin;
an attaching step which attaches the table body to the motor with the other side of the table body facing the motor, before or after the coating step and the curing step; and
a flattening step which flattens a surface of the cured resin by cutting that surface while rotating the motor attached with the table body.

5. The method of manufacturing the turn table device according to claim 4, wherein the predetermined part of the one side of the table body including the protruding portion is coated with an ultraviolet curable adhesive in the coating step, and
the ultraviolet curable adhesive is irradiated with ultraviolet rays to be cured in the curing step.

6. A method of manufacturing a turn table device, including a turn table on which an information recording medium is to be mounted and which is rotated by a motor, the method comprising:
a groove-portion forming step which forms a circumferential groove portion on one side of a tabular table body of the turn table;
a coating step which coats a resin on a predetermined part of the one side of the table body including the groove portion;
a curing step which cures the coated resin;
an attaching step which attaches the table body to the motor with the other side of the table body facing the motor, before or after the coating step and the curing step; and
a flattening step which flattens a surface of the cured resin by cutting while rotating the motor attached with the table body.

7. The method of manufacturing the turn table device according to claim 6, wherein the predetermined part of the one side of the table body including the groove portion is coated with an ultraviolet curable adhesive in the coating step, and
the ultraviolet curable adhesive is irradiated with ultraviolet rays to be cured in the curing step.

8. A turn table device comprising a turn table on which an information recording medium is to be mounted, and which is rotated by a motor, wherein
the turn table includes:
a tabular table body which is attached to the motor with one side facing the motor, and has a circumferential step portion formed on the other side; and
a resin portion which is adhered to a predetermined part of the other side of the table body including the step portion, and
a surface of the resin portion is flattened as a mount surface where the information recording medium is to be mounted.

9. The turn table device according to claim 8, wherein the resin portion is an ultraviolet curable adhesive cured.

10. The turn table device according to claim 8, wherein the other side of the table body is formed with a plurality of step portions.

11. The turn table device according to claim 8, wherein the step portion is protrusively formed in such a way that an outer circumferential side thereof becomes higher than an inner circumferential side thereof.

12. A turn table device comprising a turn table on which an information recording medium is to be mounted, and which is rotated by a motor, wherein
the turn table includes:
a tabular table body which is attached to the motor with one side facing the motor, and has a circumferential protruding portion on the other side; and
a resin portion which is adhered to a predetermined part the other side of the table body including the protruding portion, and
a surface of the resin portion is flattened as amount surface where the information recording medium is to be mounted.

13. The turn table device according to claim 12, wherein the resin portion is an ultraviolet curable adhesive cured.

14. The turn table device according to claim 12, wherein the other side of the table body is formed with a plurality of protruding portions.

15. A turn table device comprising a turn table on which an information recording medium is to be mounted, and which is rotated by a motor, wherein
the turn table includes:
a tabular table body which is attached to the motor with one side facing the motor, and has a circumferential groove portion on the other side; and
a resin portion which is adhered to a predetermined part of the other side of the table body including the groove portion, and
a surface of the resin portion is flattened as amount surface where the information recording medium is to be mounted.

16. The turn table device according to claim 15, wherein the resin portion is an ultraviolet curable adhesive cured.

17. The turn table device according to claim 15, wherein the other side of the table body is formed with a plurality of step portions.
